(19) Europäisches Patentamt

European Patent Office

Office européen des brevets

(11) **EP 1 430 788 B1**

(12) **EUROPEAN PATENT SPECIFICATION**

(45) Date of publication and mention of the grant of the patent:
**01.08.2007 Bulletin 2007/31**

(51) Int Cl.:
*A23L 1/00* *(2006.01)*       *A23L 1/217* *(2006.01)*
*A23L 1/212* *(2006.01)*

(21) Application number: **03024496.6**

(22) Date of filing: **24.10.2003**

(54) **Fried food products with reduced fat content comprising a crosslinked hydrocolloid layer and a batter layer**

Fritierte fettarme Nahrungsmittel enthaltend eine vernetzte Hydrokolloidschicht und eine Nasspanadeschicht

Produits alimentaires frits à teneur réduite en graisse, comprenant une couche d'hydrocolloide réticulé et une couche de pâte à frire

(84) Designated Contracting States:
**AT BE BG CH CY CZ DE DK EE ES FI FR GB GR HU IE IT LI LU MC NL PT RO SE SI SK TR**

(30) Priority: **19.12.2002 US 323434**

(43) Date of publication of application:
**23.06.2004 Bulletin 2004/26**

(73) Proprietor: **National Starch and Chemical Investment Holding Corporation New Castle, Delaware 19720 (US)**

(72) Inventors:
• **Dihel, Deborah L.**
  **Whitehouse Station**
  **New Jersey 08889 (US)**

• **Baytan, Cielito S.**
  **Bloomfield**
  **New Jersey 07003 (US)**
• **Gross, Akiva T.**
  **Glencoe**
  **Illinois 60022 (US)**

(74) Representative: **Held, Stephan et al**
  **Meissner, Bolte & Partner GbR**
  **Postfach 86 03 29**
  **81630 München (DE)**

(56) References cited:
  **US-A- 3 395 024**       **US-A- 3 676 158**
  **US-A- 4 504 502**       **US-A- 5 885 639**
  **US-B1- 6 290 999**

Remarks:
The file contains technical information submitted after the application was filed and not included in this specification

**Description**

BACKGROUND OF THE INVENTION

The present invention relates to a method of preparing fried foods with a low oil content and the resultant food products.

Fried foods, such as french fries, are commonplace in the diet. Batter coated potato products are known in the art and exemplified by US Patent Numbers 5,141,759; 5,601,861; 5,620,727; 5,648,110; and 6,033,967. However, due to health and diet concerns, many people have reduced or even eliminated fried foods from their diet.

Reduced oil fried food compositions are also known in the market. However, many of these suffer in taste, texture and/or appearance, or do not have a significant reduction of oil. Reduced oil products are often produced by baking, instead of frying, or frying for a more limited amount of time. Reduced oil products may also be produced by coating the product to prevent oil absorption, as exemplified by US Patent Number 6,290,999. Despite the advances in this field, there remains a need for fried food products, which have a reduced oil content, yet remain organoleptically similar to fried foods, which do not have a reduced oil content.

Surprisingly, it has now been discovered that reduced oil fried foods with acceptable taste, texture and appearance may be achieved by applying a layer of pectin to the food, crosslinking such pectin, and coating the pectin with a starch product prior to frying.

SUMMARY OF THE INVENTION

This patent pertains to reduced oil fried foods with acceptable taste, texture, and appearance which may be achieved by applying a layer of pectin to the food, crosslinking such pectin, and coating the pectin with a starch product prior to frying.

DETAILED DESCRIPTION OF THE INVENTION

This patent pertains to reduced oil fried foods with acceptable taste, texture, and appearance which may be achieved by applying a layer of pectin to the food, crosslinking such pectin, and coating the pectin with a starch product prior to frying.

The fried food may be any edible product which is to be fried, particularly fish, meat, poultry or meat-substitute portions such as fish stix and chicken nuggets, cheese such as mozzarella sticks, breads, and fruits and vegetables including onions, zucchini, carrots, eggplant, apples and potatoes. Most suitable for this invention are fried vegetables, more particularly fried potatoes such as french fries.

The food portion is first prepared for coating. For example, a vegetable is typically cleaned, optionally peeled, and may be cut into strips or other shapes. Potatoes may be cut into strips of the desired size and shapes for french fries, including without limitation shoestring potatoes, crinkle cuts, and straight cuts. The vegetables are optionally blanched according to conventional procedures to inactivate enzymes, gelatinize naturally occurring starches, remove excess free sugars to reduce Maillard browning, and/or par-cook the vegetable. Typically the vegetables are blanched by immersion in water at a temperature of from about 70 to about 99°C or exposure to steam (at ambient or higher pressures) for about 2 to about 15 minutes, depending upon the amount of blanching desired. The vegetable is then dried.

During the food portion preparation, at least one crosslinking agent is added. Suitable crosslinking agents include polyvalent cations, for example metal ions such as calcium or iron, for example in the form of calcium chloride dihydrate. The crosslinking agent may be added either by separately applying to the food portion using a solution or powder of the crosslinking agent or by adding the crosslinking agent to the blanching water if the food portion is blanched. Typically, when the crosslinking agent is added to the blanching water, it is done so in a concentration of at least about 0.2%, more particularly at least about 0.3% and no more than about 0.8% cations by weight of the solution. The crosslinking agent must be in an amount effective to crosslink the pectin to effectively reduce the oil content of the fried food.

A pectin in solution or suspension is next applied to the food portion. Particularly suitable hydrocolloids include low methoxyl pectin, amidated low methoxyl pectin, pectic acid, pectate salts. The pectin may be a single hydrocolloid or a mixture of two or more hydrocolloids.

The pectin may be hydrolyzed to decrease its molecular weight by methods known in the art including without limitation, acid, alkaline or enzymatic degradation.

The pectin is crosslinked or neutralized by exposure to the cations added during the food portion preparation steps. The crosslinking agent must be in an amount effective to crosslink the pectin to effectively reduce the oil content of the fried food. A suitable amount of crosslinking agent is such that the polyvalent cations are present at a level of at least about 0.01, particularly at least about 0.05%, more particularly at least about 0.1%, and most particularly at least about 0.2% by weight of the pectin solution or suspension (at 5% solids level) picked up by the food portion prior to drying and at least about 1.0% by weight of the pectin of the par- or fully fried food. Further, the polyvalent metal ions are present in the dry or fried coating in an amount of at least about 10%, more particularly at least about 30%, most particularly at least about 50%, equivalent weight based on the neutralization equivalent weight of the pectin.

The pectin may be applied using any method known in the art including without limitation by dipping, spraying, extruding, or dry coating such as dusting. Although not necessary, multiple layers of the hydrocolloid solution or dispersion may be used. Upon application, the pectin not only forms a film on the food portion, but will typically also penetrate the food portion. The amount of pectin, penetration, and crosslinking is directly related to the amount of oil uptake and thus oil reduction in that the pectin film formation prevents the oil from readily being absorbed by the food portion. The final dry pectin film is of a thickness effective to reduce the oil content of the fried food product to the desired level and is suitably at least about 25 microns, particularly no more than about 1.3 mm, more particularly no more than about 0.254 mm.

The pectin is then dried and the food portion is next coated with a starch batter coating. Starch, as used herein, is intended to include all starches and flours (hereinafter starches) derived from any native source, any of which may be suitable for use herein. A native starch as used herein, is one as it is found in nature. Also suitable are starches derived from a plant obtained by standard breeding techniques including crossbreeding, translocation, inversion, transformation or any other method of gene or chromosome engineering to include variations thereof. In addition, starch derived from a plant grown from artificial mutations and variations of the above generic composition, which may be produced by known standard methods of mutation breeding, are also suitable herein.

Typical sources for the starches are cereals, tubers, roots, legumes and fruits. The native source can be any variety of corn (maize), pea, potato, sweet potato, banana, barley, wheat, rice, oat, sago, amaranth, tapioca, arrowroot, canna, sorghum, and waxy and high amylose varieties thereof. As used herein, "waxy" is intended to include a starch containing no more than about 10%, particularly no more than about 5%, more particularly no more than about 3%, and most particularly no more than about 1% amylose by weight. As used herein, the term "high amylose" is intended to include a starch containing at least about 40%, particularly at least about 70%, more particularly at least about 80% by weight amylose. Particularly suitable are small granule starches, such as rice starch and amylose-containing starches. As used herein, the term "amylose-containing" is intended to include a starch containing at least about 10% by weight amylose.

The starches may be pregelatinized using techniques known in the art and disclosed for example in U.S. Patent Nos. 4,465,702, 5,037,929, 5,131,953, and 5,149,799. Also see, Chapter XXII- "Production and Use of Pregelatinized Starch", Starch: Chemistry and Technology, Vol. III-Industrial Aspects, R.L. Whistler and E.F. Paschall, Editors, Academic Press, New York 1967.

The starch may be a native starch, or a modified starch. Modified starch, as used herein, is intended to include starches which have been modified physically, chemically and/or by hydrolysis. Physical modification includes by shearing or thermally-inhibition, for example by the process described in U.S. Patent No. 5,725,676.

The starch may be chemically modified, including without limitation, crosslinked, acetylated, organically esterified, hydroxyethylated, hydroxypropylated, phosphorylated, inorganically esterified, cationic, anionic, nonionic, and zwitterionic, and succinate and substituted succinate derivatives thereof. Such modifications are known in the art, for example in Modified Starches: Properties and Uses, Ed. Wurzburg, CRC Press, Inc., Florida (1986).

The starches may be hydrolyzed, and suitable starches include fluidity or thin-boiling starches prepared by oxidation, acid hydrolysis, enzyme hydrolysis, heat and or acid dextrinization. These processes are well known in the art.

Any starch having suitable properties for use herein may be purified by any method known in the art to remove starch off flavors and colors that are native to the polysaccharide or created during processing. Suitable purification processes for treating starches are disclosed in the family of patents represented by EP 554 818 (Kasica, et al.). Alkali washing techniques, for starches intended for use in either granular or pregelatinized form, are also useful and described in the family of patents represented by U.S. 4,477,480 (Seidel) and 5,187,272 (Bertalan et al.).

The starch batter coating is prepared by dissolving or dispersing the starch or starch blend and is typically adjusted to the desired pH according to its intended end use. In general, the pH is adjusted to from about 5.0 to about 7.5, particularly from about 6.0 to about 7.0, using techniques known in the art. If further purification of the starch is desired, reaction impurities and by-products may be removed by dialysis, filtration, centrifugation or any other method known in the art for isolating and concentrating starch compositions. For example, a converted starch may be washed using techniques known in the art to remove soluble low molecular weight fractions, such as oliogosaccharides.

The starch batter coating may be comprised of a single starch, or a combination of at least two starches. Multiple coatings of the starch coating may be used if desired. The starch coating is typically applied by using a high solids starch dispersion, particularly a dispersion with a solids content of at least about 30%, more particularly at least about 40%, most particularly at least about 45% by weight. Excess starch may be blown off.

Selection of the starch coating materials is dependent upon the desired texture, taste and appearance of the fried food product and is within the skill of the artisan. Inclusion of a flour, such as rice, corn or wheat flour, reduces oil content. However, high levels, particularly at a level of more than about 13% by weight of the starch material, impairs the texture of the fried food. Ungelatinized cross-linked starches may be used in enrobing slurries (e.g. 40-60%) to minimize sticking or clumping of the strips during processing, and coat the potato strips more evenly. Crosslinked starches may be used to contribute a flat, non-glossy finish, tender texture and crispiness. Starches containing high amylose levels are good film formers due to the associations among the linear amylose polymers. By providing a strong resilient film, these starches are added to the batter (8-25%) to provide a flat coating appearance, coating strength and crispiness. High amylose starches also provide some suspension properties. Dextrins, with a quicker hydration rate, create a delicate, brittle film to improve crispiness, improve cohesion and roughen the surface. At the typical use level, between 8-15%, dextrins also provide a tender bite and snap, and very good heat hold.

Minor amounts (0.5 to 3.0%) of pre-gelatinized starches may be used to provide viscosity control and suspension of the solids in the batter. The selection of the pre-gelatinized starch must be made carefully to avoid excessive batter viscosity which promotes blow off. Further, waxy starches should be limited to prevent stickiness and other attributes that are typically considered undesirable. Waxy starches may be used in small amounts, if at all, particularly less than about 10%, more particularly less than about 5%, by weight.

Optional additives may be added, but are not necessary, including salts such as mono- and polyvalent salts; sugars; plasticizers such as propylene glycol, glycerol, sorbitol, propylene glycol monostearate, glycerol monostearate, and polyethylene glycol; inert materials such as celite, cellulose, and silica; and solvents such as water, ethanol, isopropanol, ethyl acetate, binary and tertiary materials. Particularly suitable is the addition of salts to the starch coating at a level of at least about 5%, particularly at least about 8% and no more than about 15%, particularly no more than about 12%, by weight of the starch coating. Also particularly suitable is the use of leavening agents, for example SAPP (sodium acid pyrophosphate) in the starch slurry, to provide crisping and control browning, while also providing some cohesion and adhesion and/or coloring agents (e.g. starch, whey, dextrose) to improve color. One skilled in the art may alter the ingredients and ratios in the starch slurry to optimize product attributes.

The coated food is fried in oil and/or fat. The frying may be par-frying or full frying using processes, times and temperatures known in the art. If par-fried, the par-fried food product may be finished by frying or any other method known in the art, including convection or conduction heating such as in an oven. The coated food may also be frozen for later frying or finishing, either with or without par-frying, using techniques known in the art.

The resultant fried foods contain a reduction of oil of at least about 30%, particularly at least about 35%, most particularly at least about 40%, by weight of the fried food. Further, the fried food has similar organoleptic properties to the regular fat content fried food, including color, texture, mouth feel, bite, gloss and appearance.

Other embodiments included in this invention, without limitation, include the following.

1. A fried composition which comprises:

    a) a food portion;
    b) a pectin adhered directly on the food portion, said being crosslinked; and
    c) a starch batter coating adhered to the pectin which comprises at least one starch.

3. The composition, wherein the at least one hydrocolloid is selected from the group consisting of low methoxyl pectin, amidated low methoxyl pectin, pectic acid, pectate salt.

4. The composition of embodiment 1, wherein the pectin is crosslinked using a polyvalent ion.

5. The composition of embodiment 1, wherein the pectin is crosslinked using calcium chloride.

6. The composition of embodiment 1, in which the composition is a fried or par-fried food.

7. The composition of embodiment 6, wherein the composition has a reduced fat content relative to an uncoated composition.

8. The composition of embodiment 6, wherein the composition has a reduced fat content of at least about 30% by weight of the composition.

9. The composition of embodiment 1, wherein the composition is selected from the group consisting of fish, meat, poultry, meat-substitute, cheese, breads, fruit and vegetable.

10. The composition of embodiment 6, wherein the composition is selected from the group consisting of fish, meat, poultry, meat-substitute, cheese, breads, fruit and vegetable.

11. The composition of embodiment 1, wherein the composition is a fried potato product.

12. The composition of embodiment 6, wherein the composition is a fried potato product.

13. A process of preparing the fried food composition of embodiment 6 comprising:

    a) blanching a food portion in water containing from at least about 0.1% to no more than about 0.8% cations by weight
    b) applying pectin to the blanched food portion;
    c) dipping the food portion in a starch batter coating comprising at least one starch; and
    d) frying and/or par-frying the coated food portion.

14. The process of embodiment 13, wherein the coated food portion is par-fried in (d) and further comprising (e) freezing the par-fried coated food portion to form a frozen food portion.

15. The process of embodiment 14, further comprising (f) reconstituting the frozen food portion.

16. The process of embodiment 15, wherein reconstitution is by frying.

17. The process of embodiment 15, wherein reconstitution is by oven heating.

18. A food composition prepared by the process of embodiment 13.

19. A food composition prepared by the process of embodiment 16.

20. A food composition prepared by the process of embodiment 17.

EXAMPLES

The following examples are presented to further illustrate and explain the present invention and should not be taken as limiting in any regard. All percents used are on a weight/weight basis.

The following test procedures are used throughout the examples:

Fat (oil) content - Total fat content was determined using supercritical carbon dioxide extraction in the LECO TFE 2000 (Leco Corporation, St. Josephs MI). Fries were frozen (-20°C) after final frying for a minimum of 12 hours. Frozen fries were macerated in a Waring blender. Fat analysis was performed in duplicate and reported as an average percent (w/w) on a wet solids basis.

Percent fat reduction - Percent fat reduction is determined by the following formula:

$$\% \text{ Fat Reduction} = \frac{(\% \text{ fat in control product} - \% \text{ fat in the experimental product})}{\% \text{ fat in control product}}$$

Example 1 - Preparation of Reduced Oil French Fries

Fresh potatoes were rinsed, peeled, and sliced into 0.375 inch (9.5 mm) X 0.375 inch (9.5 mm) X 3 inch (76.2mm) strips. The potato strips were then rinsed in cold water to remove starch and sugars. The strips were blanched at 70-75°C for 11 minutes in a 0.625% calcium chloride solution and dried to a moisture loss of about 13-16% by weight. The blanched potato strips were then soaked in a 5% hydrocolloid solution and dried to a moisture loss of about 18-22% by weight. The hydrocolloid-coated strips were next dipped in a 45% starch dispersion and the excess starch was blown off. The dual coated strips were then par-fried in vegetable oil at 365°C for 45 seconds and frozen at -20°C.

The frozen, dual coated strips were finished by frying at 365°C for 2 minutes and 30 seconds.

A. A control (Control A) was made in which the potato strips were not soaked in a hydrocolloid solution or dipped in a starch dispersion, and were blanched in water without added $CaCl_2$. Otherwise, the above process was followed.

B. A starch control (Control B) was made in which the potato strips were blanched in water without added $CaCl_2$, and not soaked in a hydrocolloid solution. Otherwise, the above process was followed.

C. A hydrocolloid control (Control C) was made in which the potato strips were not dipped in a starch dispersion. Otherwise, the above process was followed.

D. The above process was followed using pectin as the hydrocolloid and a starch mixture of 54.7% 0.22% sodium trimetaphosphate (STMP) cross-linked corn starch, 13.0% rice flour, 10% salt, 10% white tapioca dextrin having low solubility, 11% high amylose corn starch (70% amylose), 1% pre-gellatinized starch, and 0.3% sodium acid pyrophosphate (SAPP).

E. A hydrocolloid control (Control E) was made in which the potato strips were not dipped in a starch dispersion. The $CaCl_2$ added to the blanch water was 0.1%, and the amount of pectin in the hydrocolloid soak was 2.5%. Otherwise, the above process was followed.

F. The above process was followed using 2.5% pectin as the hydrocolloid, blanched in 0.1% $CaCl_2$, and a starch mixture of 54.7% 0.22% STMP cross-linked corn starch, 13.0% rice flour, 10% salt, 10% white tapioca dextrin having low solubility, 11% high amylose corn starch (70% amylose), 1% pre-gelled starch, and 0.3% sodium acid pyrophosphare (SAPP).

The french fries were tested for fat content, texture and appearance. The results are shown in Table I, below. French fry texture was evaluated immediately (within 2 minutes) after final frying, and after 10 minutes under the heat lamp. Criteria used included crispiness (snap, hold), bite (tender or tough, clean) and heat lamp tolerance. Appearance was judged after approximately 5 minutes after final frying, and included surface, color, finish, evenness, oiliness (bad), clumping (bad) and shine (bad).

Table I

| Sample | %Fat (%reduction) | Texture | Appearance |
|---|---|---|---|
| 1A | 10.6 | Good | Good |
| 1B | 9.0 (15) | Good | Good |
| 1C | 5.9 (44) | Poor | Poor (shiny) |
| 1D | 6.3 (40) | Fair | Good (less shiny than 1 C) |
| 1E | 6.1 (42) | Poor | Poor (shiny) |
| 1F | 7.0 (33) | Good | Good (less shiny than 1 E) |

As can be seen from Table I, the dual-coated fries had significant fat reduction, with acceptable texture and appearance. Best texture with significant fat reduction (>30%) is seen when the pectin level is reduced to 2.5% and 0.1% $CaCl_2$ is added to the blanch water.

Example 2 - Effect of Varying the Amount of Crosslinking Agent

Examples 1D and 1 F were repeated, except that the amount of crosslinking agent, calcium chloride, was varied. The results are shown below.

Table II

| Amount Pectin (%) | Amount $CaCl_2$ (%) | %Fat (%reduction) | Texture | Appearance |
|---|---|---|---|---|
| 5 (1D) | 0.625 | 6.3 (40) | Fair | Good |
| 5 | 0.15 | 7.2(32) | Fair | Good |
| 2.5 | 0.625 | 7.1 (33) | Fair | Good |
| 2.5 (1F) | 0.10 | 7.0(33) | Good | Good |
| 2.5 | 0.05 | 7.5 (26) | Good | Good |
| 2.5 | 0.01 | 7.9 (22) | Good | Good |

As can be seen from Table II, reducing the level of crosslinking agent also reduces the fat reduction levels, for both the 5% and 2.5% pectin samples. Increasing the $CaCl_2$ level on the 2.5% pectin sample does not improve fat reduction, and impairs the texture.

Example 3 - Effect of Different Starches

Example 1 D was repeated, except the rice flour was either removed (and all other solids increased to 45% solids level, pre-gel starch adjusted for viscosity to allow for equal pick up), or substituting the flour with different types of rice flour or flour from other grains. Results are shown in Table III.

| Pectin % | CaCl2 % | Flour in batter % | Flour Type | %Fat (%reduction) | Texture | Appearance |
|---|---|---|---|---|---|---|
| 5 (1D) | 0.625 | 13 | High amylose rice | 6.3 (40) | Fair | Good |
| 5 | 0.625 | 0 | N/A | 7.9 (25) | Good | Good |
| 2.5 | 0.1 | 13 | High amylose rice | 7.0 (34) | Good | Good |
| 2.5 | 0.1 | 0 | N/A | 7.7 (27) | Good | Good |

(continued)

| Pectin % | CaCl2 % | Flour in batter % | Flour Type | %Fat (%reduction) | Texture | Appearance |
|---|---|---|---|---|---|---|
| 2.5 | 0.1 | 15.6 | High amylose rice | 7.5 (29) | Poor (soggy) | Good |
| 2.5 | 0.1 | 16.25 | High amylose rice | 7.2 (32) | Poor (soggy) | Good |
| 5 | 0.625 | 13 | 98% amylopectin rice | 6.9 (35) | Good | Good |
| 5 | 0.625 | 13 | Medium grain rice | 7.0 (34) | Poor | Poor (uneven) |
| 5 | 0.625 | 13 | Stabilized brown rice | 6.9 (35) | Poor | Poor (uneven) |
| 5 | 0.625 | 13 | wheat | 6.5 (38) | Good | Good |
| 5 | 0.625 | 13 | Corn | 6.6 (38) | Good | Good |
| 5 | 0.625 | 13 | XL waxy rice starch | 6.8 (36) | Poor | Poor (sticky) |
| 5 | 0.625 | 13 | Native waxy rice starch | 9.4 (11) | Poor | Poor (sticky) |

Results from Table III show that by removing the rice flour and replacing it with native or crosslinked rice starch results in poor appearance (excessive sticking) and loss of fat reduction (with native rice starch). By removing rice flour and increasing the other starches in the batter to the same solids level, while adjusting the pre-gel starch to ensure equal viscosity and batter pick-up, texture was improved, but fat reduction was compromised. Increasing the level of rice flour >13% did not change the fat content of the fry, but did result in a less crisp texture under the heat lamp. Changing the type of rice flour, or type of grain flour did not affect the fat content of the fries. However, the texture and appearance were compromised in some cases. Best results are found when using rice, wheat or corn flour at approximately 13% of the starch slurry (% w/w "as is" solids basis).

Example 4 - Drying versus not drying (after blanching and after pectin soak) and level of moisture loss

Example 1D was repeated, except the drying step after blanching or after the hydrocolloid soak was either eliminated, or reduced. Table IV shows the results.

Table IV

| Moisture Loss % w/w after blanching | Moisture Loss % w/w after hydrocolloid soak | % Fat (% reduction) | Texture | Appearance |
|---|---|---|---|---|
| 0 | 20 | 8.0 (25) | Good | Poor (flaky) |
| 5 | 20 | 7.7 (27) | Good | Good |
| 10 | 20 | 7.4 (30) | Good | Good |
| 15 (1D) | 20 | 6.3 (40) | Fair | Good |
| 15 | 0 | 9.5 (10) | Good | Good |

Table IV shows that the drying steps after blanching and after the hydrocolloid soaking are essential for high fat reduction levels. Less drying after blanching results in higher fat contents. The amount of drying after blanching can be changed to achieve preferred texture and fat reduction levels.

Example 5 - Oven Reconstitution

Example 1 D was repeated, except the frozen par-fried potatoes were oven reconstituted (400°F, 18-22 minutes). The results are shown in Table V.

Table V

| Reconstitution method | % Fat % reduction) | Texture | Appearance |
|---|---|---|---|
| Frying (1D) | 6.3 (40) | Fair | Good |
| Oven | 4.3 (59) | Good | Good |

Highest levels of fat reduction (59%) were achieved with oven reconstituted french fries. The texture and appearance of the fries were considered highly acceptable.

Example 6 - Different Substrates

Example 1D was repeated, except with a fruit. Results are shown in Table VI.

Table VI

| Substrate | % Fat (% reduction) |
|---|---|
| Apple (uncoated) | 28.0 |
| Apple (coated) | 13.0 (54) |

Table VI shows high fat reduction levels regardless of substrate type. Processing conditions and ingredient levels can be optimized for preferred texture and appearance.

Example 7 - Crosslinked Base Starch Type

Example 1 D was repeated, except with different base starch sources for the major component of the starch batter (crosslinked starch). Results are shown in Table VII.

Table VII

| Base Starch | % Fat (% reduction) |
|---|---|
| Corn (1D) | 6.3 (40) |
| Tapioca | 6.6 (37) |
| Potato | 6.8 (36) |

Table VII shows that the type of base starch does not substantially affect performance. Preference may be given based on other attributes such as flavor or cost.

Example 8 - Level of Starch Pickup

Example 1D was repeated, except with different solids concentration in the starch batter, measured by Zahn cup (#4) viscosity. Results are shown in Table VIII.

Table VIII

| Zahn Cup Viscosity (secs.) | % Pickup | % Fat (% reduction) |
|---|---|---|
| 7 | 6.6 | 7.3(31) |
| 9 | 9.5 | 6.6 (38) |
| 12 (1D) | 11.0 | 6.3 (40) |

(continued)

| Zahn Cup Viscosity (secs.) | % Pickup | % Fat (% reduction) |
|---|---|---|
| 15 | 15.7 | 6.6 (38) |

Table VIII shows no substantial effect on fat levels once a minimum pickup of the starch batter is achieved (about 9.5%).

Example 9- Adding starch to the hydrocolloid solution

Example 1D was repeated, except different starches were added at 0.5% (%wt starch/wt solution) to the hydrocolloid solution. Results are shown in Table IX.

Table IX

| Starch Added to Hydrocolloid | % Fat % reduction) |
|---|---|
| High Amylose (70% Amylose) | 6.8 (36) |
| Tapioca dextrin, low solubility | 6.7 (37) |
| Tapioca dextrin, high solubility | 6.7 (37) |

Table IX shows that adding low levels of starches to the pectin solution does not significantly alter the fat content of the resultant french fry.

Example 10- Changing French Fry Dimension

Example 1D was repeated, except the cut size of the potato was reduced. Results are shown in Table X. An additional control (Control G) was made in which the potato strips were not soaked in a hydrocolloid solution or dipped in a starch dispersion, and were blanched in water without added $CaCl_2$. Percent fat reduction for the treated french fries are given with respect to the control of the same cut size (1A or 1G).

Table X

| Potato Strip Dimension | % Fat % reduction) |
|---|---|
| 3/8" x 3/8" x 3 " (1D) | 6.3 (40) |
| ¼" x ¼" x 3 " (shoestring) | 11.2 (38) |
| ¼" x ¼" x 3 " (shoestring) (1G) | 18.2 |

Table X shows that fat reduction level are maintained when the cut size of the potato is varied. The texture and appearance of the fries were reasonably maintained on the small cut size.

**Claims**

1. A fried composition which comprises:

   a) a food portion;
   b) a pectin adhered directly on the food portion, said pectin being crosslinked; and
   c) a starch batter coating adhered to the pectin which comprises at least one starch, wherein the composition is a fried potato product.

2. The composition of claim 1, wherein the pectin is crosslinked using a polyvalent ion.

3. The composition of claim 2, wherein the pectin is crosslinked using calcium chloride.

4. The composition of any one of claims 1 to 3, in which the composition is a fried or par-fried food.

**5.** The composition of claim 4, wherein the composition has a reduced fat content relative to an uncoated composition.

**6.** The composition of claim 4, wherein the composition contains a reduction of oil of at least about 30% by weight of the fried food.

**7.** A process of preparing a fried food compositions comprising:

a) blanching a food portion in water containing from at least about 0.1% to no more than about 0.8% cations by weight
b) applying at least one pectin to the blanched food portion wherein the pectin is crosslinked by the cations of step (a);
c) dipping the food portion in a starch batter coating comprising at least one starch; and
d) frying and/or par-frying the coated food portion.

**8.** The process of claim 7, wherein the coated food portion is par-fried in (d) and further comprising (e) freezing the par-fried coated food portion to form a frozen food portion.

**9.** The process of claim 8, further comprising (f) reconstituting the frozen food portion.

**10.** The process of claim 9, wherein reconstitution is by frying.

**11.** The process of claim 9, wherein reconstitution is by oven heating.

**12.** The fried food composition of claim 1 prepared by the process of any one of claims 7 to 11, wherein the composition is a fried potato product.

**Patentansprüche**

**1.** Frittierte Zusammensetzung, welche umfasst:

a) eine Nahrungsmittel-Portion;
b) ein Pektin, das unmittelbar auf der Nahrungsmittel-Portion haftet, wobei das Pektin vernetzt ist; und
c) ein Überzug aus einem stärkehaltigen Teig, der auf dem Pektin haftet, welcher Überzug mindestens eine Stärke umfasst, wobei die Zusammensetzung ein frittiertes Kartoffelprodukt darstellt.

**2.** Zusammensetzung nach Anspruch 1, wobei das Pektin unter Verwendung eines mehrwertigen Ions vernetzt ist.

**3.** Zusammensetzung nach Anspruch 2, wobei das Pektin unter Verwendung von Calciumchlorid vernetzt ist.

**4.** Zusammensetzung nach einem der Ansprüche 1 bis 3, bei der die Zusammensetzung ein frittiertes oder teilweise frittiertes Nahrungsmittel darstellt.

**5.** Zusammensetzung nach Anspruch 4, wobei die Zusammensetzung einen verminderten Fettgehalt im Vergleich mit einer Zusammensetzung ohne Überzug aufweist.

**6.** Zusammensetzung nach Anspruch 4, wobei die Zusammensetzung eine Verminderung des Ölgehalts von mindestens etwa 30 Gew.-% des frittierten Nahrungsmittels aufweist.

**7.** Verfahren zur Herstellung einer frittierten Nahrungsmittel-Zusammensetzung, welches umfasst:

a) Blanchieren einer Nahrungsmittel-Portion in Wasser, das von mindestens etwa 0,1 Gew.-% bis nicht mehr als etwa 0,8 Gew.-% Kationen enthält,
b) Auftragen von mindestens einem Pektin auf die blanchierte Nahrungsmittel-Portion, wobei das Pektin durch die Kationen von Schritt a) vernetzt ist;
c) Eintauchen der Nahrungsmittel-Portion in einen Überzug aus einem stärkehaltigen Teig, der mindestens eine Stärke umfasst; und
d) Frittieren und/oder teilweises Frittieren der Nahrungsmittel-Portion mit dem Überzug.

**8.** Verfahren nach Anspruch 7, wobei die Nahrungsmittel-Portion mit dem Überzug in Schritt d) teilweise frittiert wird, und e) darüber hinaus das Einfrieren der teilweise frittierten Nahrungsmittel-Portion mit dem Überzug umfasst, um eine gefrorene Nahrungsmittel-Portion zu bilden.

**9.** Verfahren nach Anspruch 8, welches f) darüber hinaus die Wiederherstellung der gefrorenen Nahrungsmittel-Portion umfasst.

**10.** Verfahren nach Anspruch 9, wobei die Wiederherstellung durch Frittieren erfolgt.

**11.** Verfahren nach Anspruch 9, wobei die Wiederherstellung durch Erhitzen in einem Ofen erfolgt.

**12.** Frittierte Nahrungsmittel-Zusammensetzung nach Anspruch 1, die durch das Verfahren nach einem der Ansprüche 7 bis 11 hergestellt wurde, wobei die Zusammensetzung ein frittiertes Kartoffelprodukt darstellt.

**Revendications**

**1.** Composition frite qui comprend .

a) une portion alimentaire ;
b) une pectine adhérant directement à la portion alimentaire, ladite pectine étant réticulée ; et
c) un enrobage de pâte à frire à l'amidon, adhérant à la pectine, qui comprend au moins un amidon, la composition étant un produit frit à base de pomme de terre.

**2.** Composition suivant la revendication 1, dans laquelle la pectine est réticulée en utilisant un ion polyvalent.

**3.** Composition suivant la revendication 2, dans laquelle la pectine est réticulée en utilisant du chlorure de calcium.

**4.** Composition suivant l'une quelconque des revendications 1 à 3, qui est un aliment ou frit ou frit à demi.

**5.** Composition suivant la revendication 4, la composition ayant une teneur réduite en matières grasses par rapport à une composition non enrobée.

**6.** Composition suivant la revendication 4, la composition ayant une teneur en huile réduite d'au moins environ 30 % en poids de l'aliment frit.

**7.** Procédé pour la préparation d'une composition alimentaire frite, comprenant :

a) le blanchiment d'une portion alimentaire dans de l'eau contenant une quantité d'au moins environ 0,1 % jusqu'à une quantité non supérieure à environ 0,8 % de cations en poids ;
b) l'application d'au moins une pectine à la portion alimentaire blanchie, la pectine étant réticulée par les cations de l'étape a) ;
c) le trempage de la portion alimentaire dans un enrobage de pâte à frire à l'amidon, comprenant au moins un amidon ; et
d) la friture et/ou la friture à demi de la portion alimentaire enrobée.

**8.** Procédé suivant la revendication 7, dans lequel la portion alimentaire enrobée est frite à demi en (d) et comprenant en outre (e) la congélation de la portion alimentaire enrobée frite à demi pour former une portion alimentaire congelée.

**9.** Procédé suivant la revendication 8, comprenant en outre (f) la reconstitution de la portion alimentaire congelée.

**10.** Procédé suivant la revendication 9, dans lequel la reconstitution est effectuée par friture.

**11.** Procédé suivant la revendication 9, dans lequel la reconstitution est effectuée par chauffage au four.

**12.** Composition alimentaire frite suivant la revendication 1, préparée par le procédé de l'une quelconque des revendications 7 à 11, la composition étant un produit frit à base de pomme de terre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5141759 A
- US 5601861 A
- US 5620727 A
- US 5648110 A
- US 6033967 A
- US 6290999 B
- US 4465702 A
- US 5037929 A
- US 5131953 A
- US 5149799 A
- US 5725676 A
- EP 554818 A, Kasica
- US 4477480 A, Seidel
- US 5187272 A, Bertalan

### Non-patent literature cited in the description

- Production and Use of Pregelatinized Starch. Starch: Chemistry and Technology. Academic Press, 1967, vol. III